# EUROPEAN PATENT SPECIFICATION

(11) **EP 1 920 553 B1**
(45) Date of publication and mention of the grant of the patent: **11.03.2015**
(21) Application number: 06783587.6
(22) Date of filing: 11.08.2006
(51) Int. Cl.: H04L 9/32, H04L 29/06, G06F 21/00

(54) **Method for moving rights object in digital rights management**
Verfahren zum Verlagern eines Rechteobjekts in der digitalen Rechteverwaltung
Procédé permettant de deplacer un objet de droits en gestion numérique des droits

(30) Priority: 12.08.2005 KR 20050074456; 16.08.2005 KR 20050074691; 25.10.2005 US 729755 P; 14.07.2006 KR 20060066574
(43) Date of publication of application: 14.05.2008
(73) Proprietor: LG Electronics Inc., Seoul 150-010 (KR)
(72) Inventor: LEE, Seung-Jae, Seoul 151-022 (KR); HAM, Jong-Geun, Hanil Town 118-1203, Gyeonggi-do 440-709 (KR)
(74) Representative: Katérle, Axel
(86) International application number: PCT/KR2006/003168
(87) International publication number: WO 2007/021108

(56) References cited:
- EP-A2- 1 509 024
- WO-A1-2005/091163
- IRWIN J: "Digital Rights Management: The Open Mobile Alliance DRM specifications", INFORMATION SECURITY TECHNICAL REPORT, ELSEVIER ADVANCED TECHNOLOGY, vol. 9, no. 4, 1 December 2004 (2004-12-01), pages 22-31, XP004725490, ISSN: 1363-4127, DOI: DOI:10.1016/S1363-4127(05)70037-6

## Description

### Technical Field

The present invention relates to a Digital Rights Management (DRM), and more particularly, to a method for moving Rights Object (RO) between Devices in a DRM, a DRM system, and a Device.

### Background Art

The DRM is technique to protect Rights Object (RO) for digital content (or DRM content) and systematically manage it, and provides a protecting and managing scheme for preventing an illegal copy of the content, acquiring RO, and generating/transferring the content.

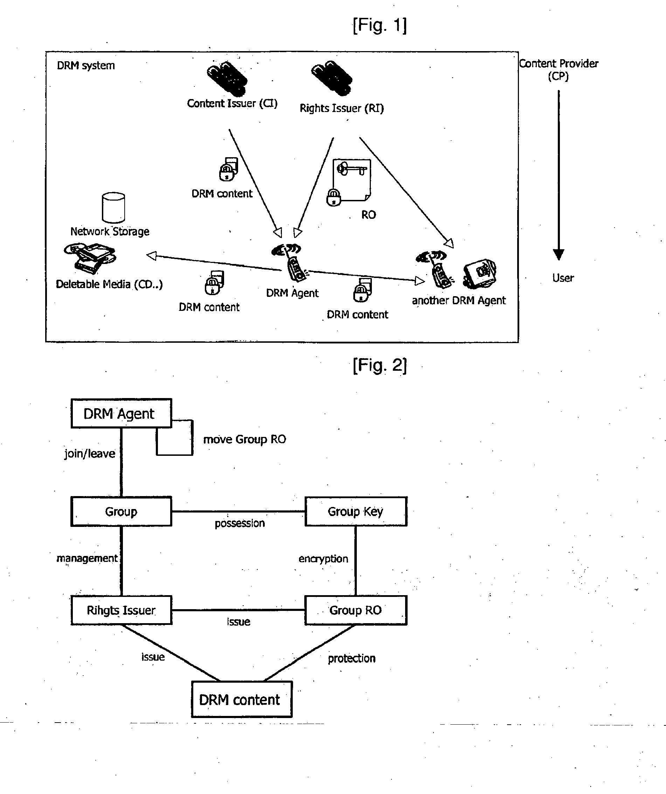

FIG. 1 is a configuration view showing a Digital Rights Management (DRM) system in accordance with the related art. The DRM system controls content issued to a user by a content provider to be used only in a right-limit of RO. The content provider is an entity corresponding to a Content Issuer (CI) or a Rights Issuer (RI).

The CI issues DRM content protected by a specific encryption method so as to protect content from a user having no access right, and the RI issues a Rights Object (RO) necessary to use the DRM content.

A DRM Agent is mounted at a Device thus to receive the DRM content and RO from the CI or the RI, and controls a usage of the DRM content at a corresponding device by analyzing a 'Permission' or a 'Constraint'.

### Disclosure of Invention

### Technical Problem

A method for moving DRM content and RO between Devices is required so as to enhance a utility of the DRM content. Especially, a method for protecting RO for DRM content (hereinafter, will be referred to as 'RO') by safely moving the RO between Devices in a specific group is required.

Furthermore, a method for moving a part of RO between Devices is required, and a method for preventing an illegal or unlicensed moving of RO by allowing only a Device having a specific permission to move RO is required.

### Technical Solution

Therefore, an object of the present invention is to provide a method for moving Rights Object (RO) in a Digital Rights Management (DRM) capable of safely moving a part or all of RO for DRM content between Devices.

To achieve these and other advantages and in accordance with the purpose of the present invention, as embodied and broadly described herein, there is provided a method for moving Rights Object (RO) in a Digital Rights Management (DRM), comprising: moving to second device a part or all of RO for DRM content by first device having RO for DRM content; and deleting a part or all of RO stored in the first device by the first device, when the moving of the RO is completed.

To achieve these and other advantages and in accordance with the purpose of the present invention, as embodied and broadly described herein, there is also provided a DRM system, comprising: first device for moving a part or all of Rights Object (RO) for DRM content; second device for receiving the RO; and a Rights Issuer (RI) having 'move permission' to instruct whether the RO is to be moved or not, for moving the RO to the first device.

To achieve these and other advantages and in accordance with the purpose of the present invention, as embodied and broadly described herein, there is still also provided a Device, comprising: a DRM Agent for moving a part or all of Rights Object (RO) for DRM content to another Device.

The document EP 1 509 024 A2 (SAMSUNG ELECTRONICS CO LTD [KR]), 23 February 2005 (2005-02-23), discloses the principle of safely moving a Rights Object (RO) in a Digital Rights Management (DRM) system (such as that defined by the Open Mobile Alliance DRM specifications) between the Devices in the same group, while minimising the involvement of a Rights Issuer (RI).

The foregoing and other objects, features, aspects and advantages of the present invention will become more apparent from the following detailed description of the present invention when taken in conjunction with the accompanying drawings.

### Brief Description of the Drawings

The accompanying drawings, which are included to provide a further understanding of the invention and are incorporated in and constitute a part of this specification, illustrate embodiments of the invention and together with the description serving to explain the principles of the invention.

In the drawings:
FIG. 1 is a configuration view showing a Digital Rights Management (DRM) system in accordance with the related art;
FIG. 2 is a block diagram schematically showing a system for implementing a method for moving Rights Object (RO) for DRM according to the present invention;
FIG. 3 is a flowchart showing a method for moving RO according to a first embodiment of the present invention;
FIG. 4 is a flowchart showing a method for moving RO according to a second embodiment of the present invention;
FIG. 5 is a flowchart showing a method for moving RO according to a third embodiment of the present invention;
FIG. 6 is a flowchart showing a method for moving RO according to a fourth embodiment of the present invention;
FIG. 7A shows sub-elements of a 'Move' element for RO according to the present invention;
FIG. 7B shows sub-elements of a 'Permission' element according to the present invention;
FIG. 8 is a flowchart showing a method for partially or entirely moving RO including move permission between Devices according to a fifth embodiment of the present invention;
FIG. 9 is a flowchart showing a method for partially entirely moving RO from Device 1 to Device 2 according to a sixth embodiment of the present invention; and
FIG. 10 is a flowchart showing a method for partially or entirely moving RO from Device 1 to Device 2 by a request of the Device 2 according to a seventh embodiment of the present invention.

### Mode for the Invention

Reference will now be made in detail to the preferred embodiments of the present invention, examples of which are illustrated in the accompanying drawings.

Hereinafter, a method for moving (or shifting or transferring) Rights Object (RO) for DRM content in a Digital Rights Management (DRM) capable of moving RO between Devices, a DRM system thereof, and a Device thereof.

FIG. 2 is a block diagram schematically showing a system for implementing a method for moving Rights Object (RO) for DRM according to the present invention.

A Group (or a Domain) is an entity managed by a Rights Issuer (RI), and is provided with a Group Key (or a Domain Key). The Group Key is allocated to a corresponding Group, and is used to encode and decode Group RO (or Domain RO). The Group RO is issued by the RI, and includes RO for DRM content encoded by the Group Key. The DRM content is configured to be decoded by an encryption key included in the Group RO so as to be used only by a user having the Group Key. A DRM Agent is mounted in a specific Device thus to allow join or leave to/from the Group, and moves the Group RO to another DRM Agent which is present in the Group as a member of the Group.

The Group denotes a collection of one or more Devices, in which the Devices are grouped so that one Device can have an exclusive RO at a certain time point. When the RO is moved to another Device inside the Group, State Information of the RO is together moved.

Rights Object for DRM content is divided into a Stateful RO and a Stateless RO. The Stateless RO is RO that a Device does not manage State Information. The Stateful RO is RO that a Device manages State Information so as to precisely utilize the Permission and Constraint inside the RO. The Constraint managed by the State Information includes 'interval', 'count', 'timed-count', 'accumulated', etc.

The State Information indicates a usable amount of RO, and one State Information is managed by one Stateful RO.

The DRM content can be issued by the CI or the RI. In the present invention, it is supposed that the DRM content is issued by the RI.

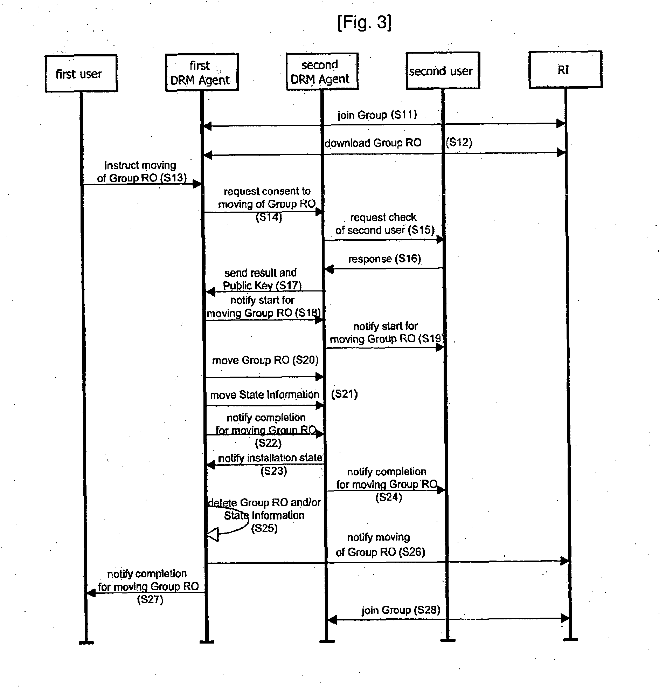

FIG. 3 is a flowchart showing a method for moving RO according to a first embodiment of the present invention, in which one user having RO for specific content moves the RO to another user.

It is supposed that one user transceive data (or signal) with another user's DRM Agent or RI through a DRM Agent.

A first user joins a Group managed by RI through DRM Agent 1 mounted at Device 1 (S11), and downloads Group RO encoded by a corresponding Group Key from the RI (S12). The DRM Agent 1 can receive a Group Key used to decode the RO in steps S11 and S12.

The DRM content may be downloaded independently of a downloading of the Group RO. That is, the DRM content can be downloaded before/after the Group RO, or simultaneously with the Group RO.

The first user instructs the DRM Agent 1 to move the RO for the DRM content to the Device 2 having the DRM Agent 2 (S 13). Then, the DRM Agent 1 checks whether to move the Group RO or not from the DRM Agent 2 or the second user (S 14 to S 17). Herein, the DRM content with respect to the Group RO can be moved independently of or together with the Group RO.

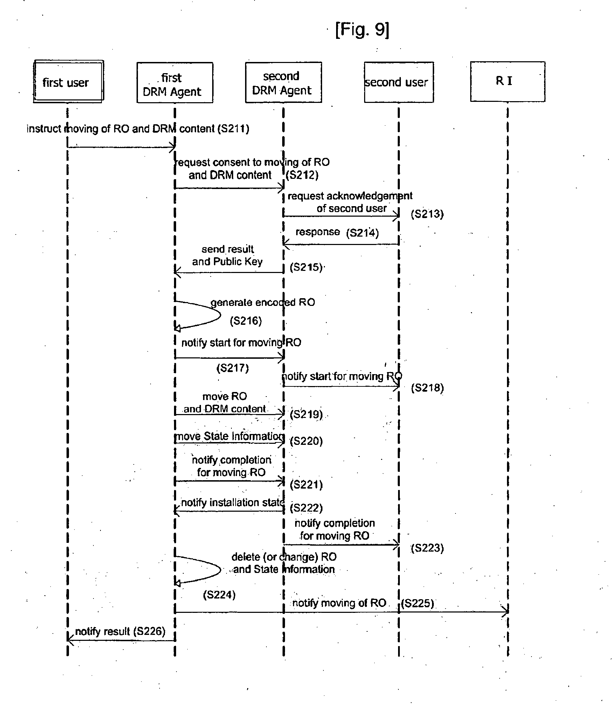

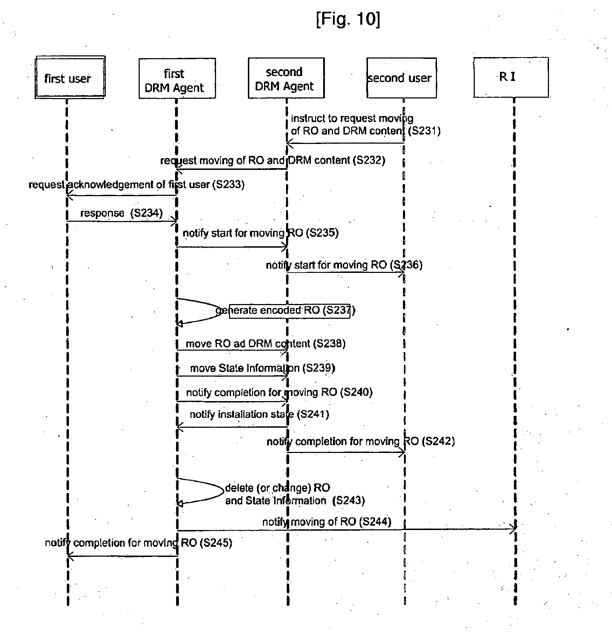

The DRM Agent 1 can move to the DRM Agent 2 the following parameters; an Group RO ID and brief information of the Group RO, and/or an DRM content ID and brief information of the DRM content so that the DRM Agent 2 or the second user may view the DRM content and/or the Group RO to be transferred. When the Group RO is Stateful RO, the DRM Agent 1 can move State Information such as a usable amount, that is, a usable number of times or time to the DRM Agent 2 after moving the Group RO to the DRM Agent 2. Herein, a part or all of the Group RO can be moved to the DRM Agent 2 from the DRM Agent 1 with State Information. A method for moving a part or all of the Group RO to the DRM Agent 2 from the DRM Agent 1 will be explained in more detail with reference to FIGS. 9 and 10.

The steps S 14 to S 17 can be optionally performed.

The DRM Agent 1 moves a request for moving RO to the DRM Agent 2 (S 14), and the DRM Agent 2 asks the second user whether to consent to receive the Group RO thus to request an acknowledgement from the second user (S15). Herein, when the DRM Agent 2 receives the request for moving RO, it can move a result with respect to the request for moving RO to the second user without asking the second user whether to consent to receive the Group RO.

The second user, requested to respond to the acknowledgement request from the DRM Agent 2, selects an acceptance (approval) or a refusal for moving RO, thereby responding to the acknowledgement request from the DRM Agent 2 (S16). Then, the DRM Agent 2 moves a response for moving RO to the DRM Agent 1 (S 17). Herein, the DRM Agent 2 can move a Public Key of the Device 2 to the DRM Agent 1 together with the response for moving RO.

The DRM Agent 1 having received the response for moving RO from the DRM Agent 2 or having received an acceptance (approval) for moving Group RO from the second user moves a start for moving Group RO to the DRM Agent 2 (S18). The DRM Agent 2 can inform the start for moving Group RO to the second user, e.g. by a visual means or an auditory means (S19). The steps S18 and S19 can be optionally performed.

The DRM Agent 1 moves the Group RO to the DRM Agent 2 (S20). The DRM Agent 1 can move the DRM content and the Group RO as one package, or separately from each other.

When the Group RO having moved to the DRM Agent 2 from the DRM Agent 1 is a Stateful RO, the DRM Agent 1 moves State Information to the DRM Agent 2 (S21). Herein, the DRM Agent 1 can move the State Information to the DRM Agent 2 with an encoded state by using a Public Key of the DRM Agent 2 for security. The step of S21 can be optionally performed, or can be performed simultaneously with the step S20.

When the Group RO is completely moved, the DRM Agent 1 sends a completion for moving the Group RO to the DRM Agent 2 (S22). Then, the DRM Agent 2 sends a signal (or a message) informing that the Group RO or the State Information is successfully installed to the DRM Agent 1 (S23). Herein, the step for moving a signal (or a message) to the DRM Agent 1 from the DRM Agent 2 can be performed or omitted.

The DRM Agent 2 notifies to the second user that the DRM content and the Group RO have been moved (S24).

When the DRM Agent 1 receives a signal (or a message) that the Group RO or the State Information have been installed from the DRM Agent 2, or when the DRM Agent 1 completes to send the Group RO or the State Information to the DRM Agent 2, the DRM Agent 1 deletes the Group RO or the State Information therefrom (S25). When a part of the Group RO is moved, the DRM Agent 1 deletes the part of the Group RO (that is, moved Group RO). Herein, the State Information (for the Group RO) is not deleted but is changed.

The DRM Agent 1 notifies the RI that the Group RO has been moved to the DRM Agent 2 (S26). Information notified to the RI from the DRM Agent 1 includes at least one of an Device ID of a Device for moving the Group RO, an Device ID of a Device for receiving the Group RO, an Group RO ID of a Group RO, a Timestamp and a Signature. The step for moving the information to the RI by the DRM Agent 1 can be optionally performed.

The DRM Agent 1 notifies to the first user that the DRM content and the Group RO have been successfully moved to the DRM Agent 2 (S27), and the DRM Agent 2 joins the Group so as to obtain a Group Key for decoding the Group RO received from the DRM Agent 1 (S28). The DRM Agent 2 can access to the RI by using an address (e.g. Uniform Resource Locator: URL) of RI included in the Group RO.

FIG. 3 shows that the DRM Agent 2 joins the Group after receiving the Group RO. However, the DRM Agent 2 can join the Group before receiving the Group RO.

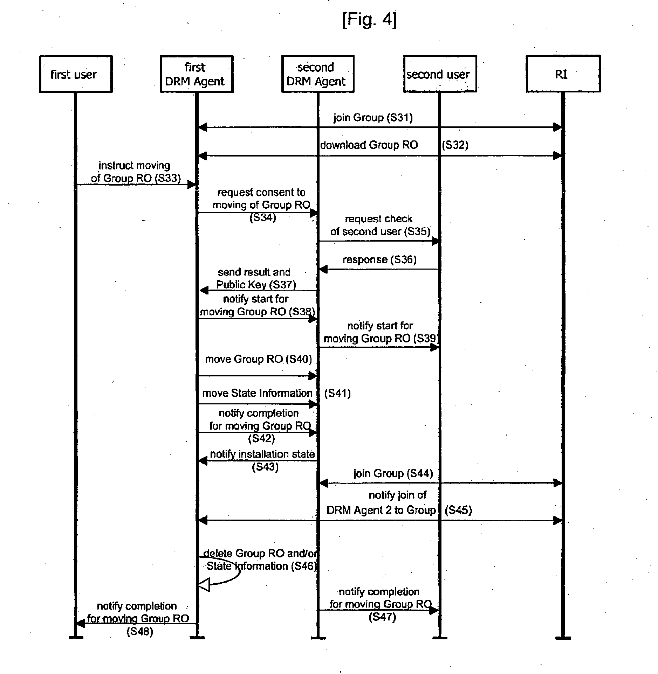

FIG. 4 is a flowchart showing a method for moving RO according to a second embodiment of the present invention.

The second embodiment shown in FIG. 4 is similar to the first embodiment shown in FIG. 3. However, the second embodiment is different from the first embodiment in a time point of the DRM Agent 2 having received the Group RO to join the Group.

The steps S31 to S43 according to the second embodiment of FIG. 4 are equal to the steps S11 to S23 according to the first embodiment of FIG. 3, and thus their explanation will be omitted. Hereinafter, steps next to the step S43 will be explained.

The DRM Agent 2 joins the Group managed by the RI thereby to obtain a Group Key for decoding the Group RO (S44). Then, the RI sends a signal (or a message) to the DRM Agent 1, the signal informing that the Group RO is completely moved to the DRM Agent 2 and the DRM Agent 2 has joined the Group (S45). Herein, the DRM Agent 2 can access to the RI by using an address of RI included in the Group RO.

The DRM Agent 1 having received the signal (or a message) that the DRM Agent 2 has joined the Group deletes the Group RO and/or the State Information therefrom (S46). When a part of the Group RO is moved, the DRM Agent 1 deletes the part of the Group RO (that is, moved Group RO). Herein, the State Information (for the Group RO) is not deleted but is changed.

The DRM Agent 2 sends a signal (or a message) that the DRM content and/or the Group RO have been successfully received to the second user (S47), and the DRM Agent 1 sends a signal (or a message) that the DRM content and/or the Group RO have been successfully moved to the first user (S48).

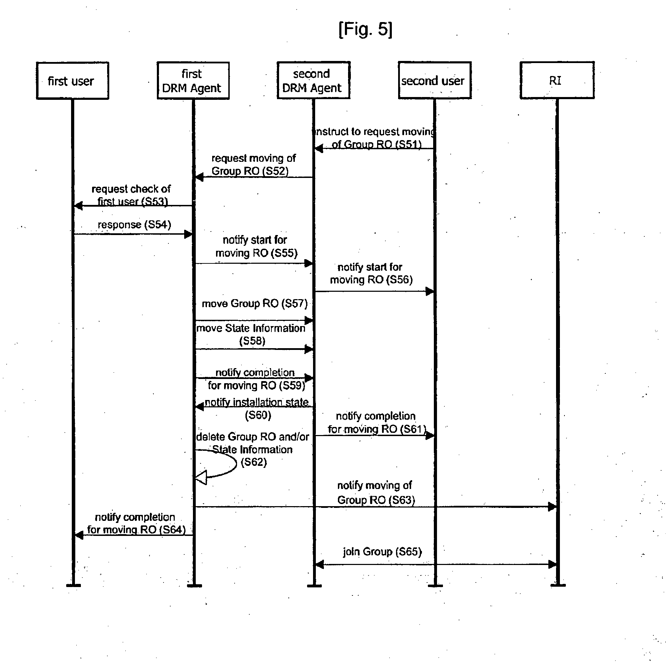

FIG. 5 is a flowchart showing a method for moving RO according to a third embodiment of the present invention, which shows a method for moving RO from one user having the RO to another user when requested to move the RO. Herein, it is supposed that another user requesting moving of the RO for a DRM content already knows the DRM content ID and/or Group RO ID of said one user.

The second user instructs the DRM Agent 2 to receive Group RO of the DRM Agent 1 mounted in the Device 1 of the first user (S51).

The DRM Agent 2 sends a request for moving Group RO to the DRM Agent 1 (S52). The request signal includes an DRM content ID of the DRM content and/or an Group RO ID of Group RO, both of which are requested by the DRM Agent 2, and can include a Public Key for a Device of the second user.

The DRM Agent 1 asks the first user whether to permit moving of the Group RO (S53), and the first user responds to the DRM Agent 1 (S54). The step of S53 can be optionally performed.

The DRM Agent 1 having received the request for moving Group RO from the DRM Agent 2 or having received 'move permission' for moving the Group RO from the first user sends a start for moving Group RO to the DRM Agent 2 (S55), and/or sends a start for moving Group RO to the second user through the DRM Agent 2 (S56).

The steps S55 and S56 can be optionally performed.

The DRM Agent 1 sends the Group RO to the DRM Agent 2 (S57). Herein, the DRM content and the Group RO can be moved as one package, or can be separately moved from each other.

When the Group RO is Stateful Group RO, the DRM Agent 1 moves State Information to the DRM Agent 2 (S58). The Group RO can be moved as an encoded state by a Group Key, or can be moved as an encoded state by a Public Key for Device of the second user.

When the Group RO is completely moved, the DRM Agent 1 sends a completion signal (or a message) for moving the DRM content and the Group RO to the DRM Agent 2 (S59).

Then, the DRM Agent 2 sends a signal (or a message) informing that the Group RO and the State Information are successfully installed to the DRM Agent 1 and the second user (S61). The steps S61 to S65 according to the third embodiment are equal to the steps S24 to S28 according to the first embodiment of FIG. 3, and thus their explanation will be omitted.

FIG. 5 shows that the DRM Agent 2 joins the Group after receiving the Group RO. However, the DRM Agent 2 can join the Group before receiving the Group RO.

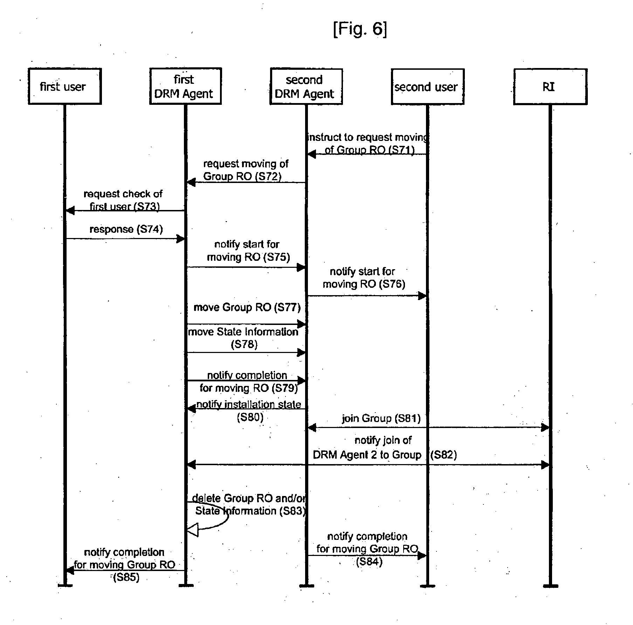

FIG. 6 is a flowchart showing a method for moving RO according to a fourth embodiment of the present invention, which shows a method for moving RO from one user having the RO to another user when requested to move the RO. Herein, it is supposed that another user requesting moving of the RO already knows a content ID of said one user having the RO and/or an ID of Group RO. The fourth embodiment shown in FIG. 6 is similar to the third embodiment shown in FIG. 5. However, the fourth embodiment is different from the third embodiment in a time point of the DRM Agent 2 having received the Group RO to join the Group.

The steps S71 to S80 according to the fourth embodiment of FIG. 6 are equal to the steps S51 to S60 according to the first embodiment of FIG. 3, and thus their explanation will be omitted. Also, the steps S80 to S85 according to the fourth embodiment of FIG. 6 are equal to the steps S44 to S48 according to the second embodiment of FIG. 4, and thus their explanation will be omitted.

In the aforementioned embodiments, moving of Group RO was explained. However, a part or all of RO between Devices will be explained. The Devices can be included in the same group, but are not limited thereto. The RO partially or entirely moved between the Devices can be Group RO, but is not limited thereto.

In order to move a part or all of RO between Devices, a Device (a Device for moving RO) has to receive 'move permission' for moving RO from RI.

Hereinafter, the move permission and moving a part or all of RO will be explained.

The Rights Issuer (RI) issues RO to the Device 1 together with 'move permission' to instruct whether to move the RO to at least one Device 2. The move permission can be included in the RO, or can be moved as a certain parameter when the RO is moved.

The Device 1 determines whether to move a part or all of the RO received from the RI to another Device after checking whether 'move permission' exists in the RO.

Whether to move the RO to another Device can be determined according to whether 'move permission' exists in the RO or not, or according to a value of 'move permission' in the RO.

When a part or all of the RO can be moved as a result of the checking of the move permission, the Device 1 directly moves a part or all of the RO to the Device 2 after obtaining consent from the Device 2. When a request for moving RO is received from the Device 2, the Device 1 directly moves to the Device 2 a part or all of the RO after checking the move permission of the RO if the RO can be movable.

Hereinafter, the move permission of the RO, and terms relevant thereto will be explained.

All of the RO denotes all of usable RO not having been used yet after being issued from the RI, or all of usable RO remaining after being used. A part of the RO denotes a part of usable RO not having been used yet after being issued from the RI, or a part of usable RO remaining after being used.

The RO is expressed by using a Right Expression Language (REL). The REL expressed as various formats is mainly expressed as an XML format. Accordingly, 'move permission' when the RO is expressed as an XML format will be explained in the present invention.

Hereinafter, the move permission will be explained with reference to the DRM system including the RI, the Device 1, and the Device 2 shown in FIG. 3. The Device 1 is provided with DRM Agent 1, and the Device 2 is provided with DRM Agent 2.

The RI sends 'move permission' to instruct moving of RO to the Device 1 together with the RO. When the RO is expressed as an XML format, information relevent to the moving is included in the move permission.

Only the Device 1 having received RO with a 'Move' element can move (or transfer) content to the Device 2.

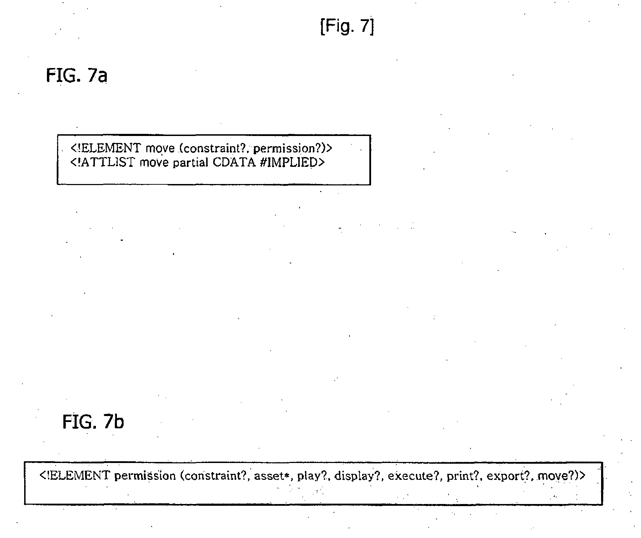

As shown in FIG. 7A, the 'Move' element can include at least one of 'Permission' and 'Constraint' as a sub-element. As shown in FIG. 7B, the 'Move' element can be used as a sub-element of the 'Permission'.

When the 'Move' element has the Constraint as a sub-element, RO can be moved in a condition of the Constraint. The Constraint has a limited condition used in a general DRM system, and includes 'count', 'timed-count', 'datetime', 'interval', 'accumulated', 'individual', 'system', etc.

The 'count' is a condition for limiting the number of times of content usage, and the 'timed-count' is a condition for limiting the number of times of content usage considering that content is used one time whenever a certain time is lapsed. Also, the 'datetime' is a condition for limiting content usage by setting starting and ending time and the 'interval' is a condition for limiting content usage by allowing content usage only during a certain period from a starting time. The 'accumulated' is a condition for limiting content usage by calculating a total usage time of content and limiting content usage to a certain time. Also, the 'individual' is a condition for allowing only a certain user or a certain Device to use content, and the 'system' is a condition for limiting a system in which content is used.

When the 'Move' element has the Permission as a sub-element, the DRM Agent 1 of the Device issues RO for allowing only operations defined by the Permission to the DRM Agent 2 of the Device 2.

When the 'Move' element does not have the Permission as a sub-element, the DRM Agent 1 of the Device issues RO for allowing all operations issued from the RI to the DRM Agent 2 of the Device 2.

When RO does not have the Permission or has a 'Move' as a sub-element of the Permission as shown in FIG. 7B, the Device 1 issues RO including the 'Move' to the Device 2. Then, the Device 2 moves the RO including the 'Move' to another Device such as Device 3.

The 'Move' may has a partial characteristic (or attribute) indicating moving a part of RO. When the partial characteristic has a value for indicating moving a part of RO (for instance, when the partial characteristic has a true value or RO is Stateful RO), the Device 1 moves a part of RO to the Device 2.

For instance, when the partial characteristic has a true value and the Device 1 having received RO for 10 hours has used 2 hours, the Device 1 can move a part (3 hours) of the remaining hours (8 hours) to the Device 2. Moving a part of RO is performed by changing State Information, etc.

Hereinafter, a preferred embodiment for moving RO including 'move permission' will be explained.

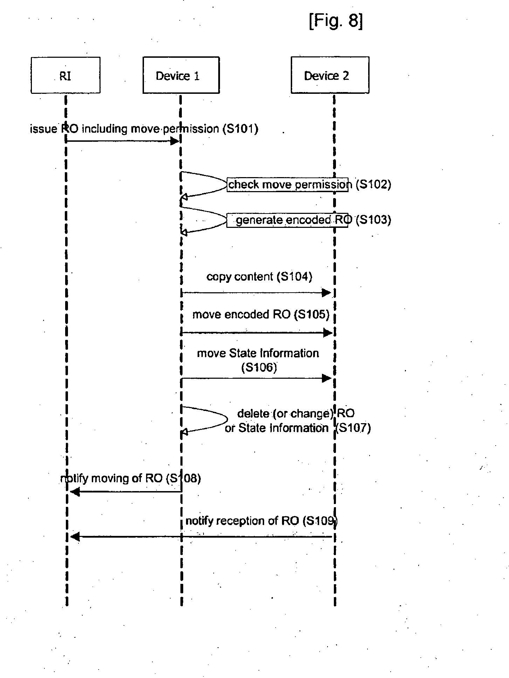

FIG. 8 is a flowchart showing a method for partially or entirely moving RO including move permission between Devices according to a fifth embodiment of the present invention.

RI can issue movable RO or unmovable RO, and the Device 1 can purchase content by representing intention to move RO to another Device.

The RI issues to the Device 1 RO including 'move permission' according to the intention of the Device 1, the 'move permission' for allowing moving of RO to another Device (S101). Herein, when the RO is Stateful RO at the time of moving a part of RO, the 'move permission' has a partial characteristic value for indicating moving a part of RO.

The Device 1 checks the 'move permission' of RO, and determines whether to move the RO according to the 'move permission' (S102). When moving a part or all of RO is allowed, the Device 1 moves a part or all of the RO to another Device (such as Device 2). On the contrary, when moving a part or all of RO is not allowed, the Device 1 does not move a part or all of the RO to another Device.

For instance, when the RO does not have 'move permission' or the RO has 'Move' as a sub-element of the 'Permission' element, the Device 1 can move the RO to the Device 2 together with the 'Move' in the RO.

When the Device 1 moves the RO to the Device 2, the Device 1 decodes the RO by using a Private Key thereof thus to generate decoded RO, and then encodes the decoded RO by using a Public Key of the Device 2 thus to generate encoded RO (S103).

The Device 1 copies content to the Device 2 (S104). The step of S104 can be performed before or after moving RO, or can be simultaneously performed at the time of moving RO.

The Device 1 moves the encoded RO generated in S103 to the Device 2 (S105).

When the encoded RO is Stateful RO and all of the RO are to be moved, the Device 1 moves State Information to the Device 2 (S106). However, when the encoded RO is Stateful RO and a part of the RO is to be moved in S106, the Device 1 moves State Information relevant to a part of the RO to the Device 2.

When all of the RO are to be moved, the Device 1 deletes the RO. When the RO is Stateful RO, the Device 1 deletes State Information of the RO (S107). However, when a part of the RO is to be moved, the Device 1 updates the State Information.

At least one of the Device 1 and the Device 2 notifies moving of the RO to the RI (S108, S109).

As aforementioned, a part or all of RO can be moved from one Device to another Device after 'move permission' of the RO is checked.

Hereinafter, a method for moving a part or all of RO will be explained with reference to FIGS. 9 and 10.

FIG. 9 is a flowchart showing a method for partially or entirely moving RO from Device 1 to Device 2 according to a sixth embodiment of the present invention. The first user is a user of the Device 1, and the DRM Agent 1 is a DRM Agent of the Device 1. Also, the second user is a user of the Device 2, and the DRM Agent 2 is a DRM Agent of the Device 2.

Although not shown in FIG. 9, the RI issues RO to the DRM Agent 1 of the Device 1 with 'move permission', which is the same as FIG. 8. Accordingly, the 'move permission' aforementioned in FIG. 8 is applied to FIG. 9.

The first user instructs the DRM Agent 1 to move DRM content and a part or all of RO to the Device 2 (S211). The part or all of RO can be a part or all of usable RO not having been used yet after being issued from the RI, or can be a part or all of usable RO remaining after being used by the Device 1.

The DRM Agent 1 checks 'move permission' of the RO, and determines whether to move the RO according to the 'move permission'. When moving of the RO is not allowed, the DRM Agent 1 informs the first user that moving of the RO is not allowed and then finishes a next step.

However, when the moving of the RO is allowed, the DRM Agent 1 requests the DRM Agent 2 to check whether the second user wants to receive the DRM content and the RO (S212). Herein, an ID of the DRM content, information of the DRM content, an ID of the RO, and information of the RO, information with respect to an authentication request of the Device 2, etc. are moved from the DRM Agent 1 to the DRM Agent 2. When the RO is Stateful RO, a usable amount of the RO is moved. For instance, if all of RO that can be used 10 times are to be moved, when a remaining amount of the RO is 7 times, State Information that the RO can be used 7 times is moved.

The DRM Agent 2 asks the second user whether to receive the DRM content and the RO (S213). Then, the second user sends a response for the question to the DRM Agent 2 (S214).

The DRM Agent 2 sends a result of the received response to the DRM Agent 1 (S215). Herein, an authentication of the Device 2 is performed, and a Public Key of the Device 2 is also moved to the DRM Agent 1.

When the second user wants to receive the DRM content and the RO as a result of the response, the DRM Agent 1 decodes the RO by using a Private Key of the Device 1 thus to generate decoded RO, and then encodes the decoded RO by using a Public Key of the Device 2 thus to generate encoded RO (RO') (S216). The DRM Agent 1 disables the RO.

Then, the DRM Agent 1 can optionally inform the DRM Agent 2 a start for moving RO (S217), and the DRM Agent 2 can inform the second user the start for moving RO (S218).

The DRM Agent 1 moves the DRM content and the RO (RO') encoded in step S216 to the DRM Agent 2 (S219). Herein, the RO (RO') and the DRM content can be moved separately from each other, or can be moved together by being packaged in a DRM content format (DCF).

When the RO is Stateful RO, the DRM Agent 1 moves the encoded RO(RO') to the DRM Agent 2 together with State Information (S220). The State Information shows a remaining amount of the RO. The DRM Agent 1 can move the State Information to the DRM Agent 2 by encoding with using a Public Key of the Device 2.

When the RO is Stateless RO, the DRM Agent 1 does not manage State Information of che RO.

The DRM Agent 1 notifies a completion for moving RO to the DRM Agent 2 (S221).

The DRM Agent 2 informs the DRM Agent 1 whether the received RO(RO'), the State Information, the DRM content have been successfully installed (S222). The step of S222 can be optionally performed.

The DRM Agent 2 notifies the completion for moving RO to the second user (S223).

When the DRM Agent 2 have successfully installed the RO(RO'), the State Information, the DRM content, the DRM Agent 1 deletes the RO managed by itself. When the RO is Stateful RO, the DRM Agent 1 also deletes the State Information of the RO (S224). However, when the Device 1 have moved a part or all of the DRM content and the RO to the Device 2 in step S224, the DRM Agent 1 of the Device 1 does not delete the RO but updates only the State Information of the RO managed by itself. That is, the State Information of the RO shows a remaining amount of the RO after being moved to the DRM Agent 2. However, when the RO can not be used any longer as a result of the update of the State Information, the DRM Agent 1 can delete the RO.

The DRM Agent 1 notifies moving of the RO to the RI (S225). The notification information includes an ID of the transferring Device (Device 1), a Device ID of the receiving Device (Device 2), an RO ID of moved RO, and Timestamp denoting moved time of the RO, etc. A Signature can be optionally included in the notification information. The Signature serves to certify the notification information including a Device ID of the transferring Device (Device 1), a Device ID of the receiving Device (Device 2), an RO ID of moved RO, and Timestamp indicating moved time of the RO, etc. The step of S225 can be optionally performed.

The DRM Agent 1 notifies a completion for moving the RO and the DRM content to the first user (S226).

Although not shown in FIG. 9, the DRM Agent 2 can notify a reception of the RO to the RI.

The Device 1 moves a part or all of the RO to the Device 2.

FIG. 10 is a flowchart showing a method for partially or entirely moving RO from Device 1 to Device 2 by a request of the Device 2 according to a seventh embodiment of the present invention. FIG. 10 is different from FIG. 9 in that RO is moved to the Device 2 from the Device 1 by a request of the Device 2.

Although not shown in FIG. 10, the RI can issue the RO to the DRM Agent 1 of the Device 1 with including 'move permission' as aforementioned in FIG. 8. The, the DRM Agent 1 of the Device 1 checks the 'move permission' of the RO when moving of the RO is requested, and determines whether to the move the RO according to the 'move permission'.

The DRM Agent 2 can already know the RO ID and the DRM content ID both of which managed by the DRM Agent 1.

The second user can select DRM content and RO required to be received while searching the DRM content of the Device 1 through the Device 2.

The second user instructs the DRM Agent 2 to request the Device 1 to move a part or all of specific DRM content and RO (S231).

The DRM Agent 2 requests the Device 1 to move a part or all of the specific DRM content and RO (S232). Herein, an ID of the DRM content and an ID of the RO are moved to the DRM Agent 1, an authentication of the Device 2 is performed, and a Public Key of the Device 2 is together moved to the DRM Agent 1.

When the RO is issued with 'move permission', the DRM Agent 1 of the Device 1 certifies the 'move permission' and determines whether to move the RO when moving of the RO is requested. When the moving of the RO is possible, the DRM Agent 1 asks the first user whether to consent to the moving of the RO. However, when the moving of the RO is not possible, the DRM Agent 1 informs the fact and finishes a next step. The step is performed when the RO is issued with 'move permission'.

The DRM Agent 1 of the Device 1 having received the request for moving RO asks the first user whether to consent to the moving of the DRM content and the RO (S233). The first user sends a response for the question to the DRM Agent 1 (S234).

When the first user consents to the moving of the DRM content and the RO as a result of the response, the DRM Agent 1 notifies a start for moving RO to the DRM Agent 2 (S235). Then, the DRM Agent 2 notifies the start for moving RO to the second user (S236). The steps S235 and 236 can be optionally performed.

The DRM Agent 1 decodes the RO by using a Private Key of the Device 1 thus to generate decoded RO (RO'), and then encodes the decoded RO by using a Public Key of the Device 2 thus to generate encoded RO (RO') (S237).

The DRM Agent 1 moves the DRM content and the RO (RO') encoded in step S237 to the DRM Agent 2 (S238). Herein, the RO (RO') and the DRM content can be moved separately from each other, or can be moved together by being packaged in a DRM content format (DCF).

When the RO is Stateful RO, the DRM Agent 1 moves the State Information to the DRM Agent 2 (S239). The State Information indicates an entire remaining amount of the RO when all of the RO are to be moved, and indicates a part of a usable amount of the RO when a part of the RO is to be moved. The DRM Agent 1 can move the State Information to the DRM Agent 2 by encoding with using a Public Key of the Device 2.

When the RO is Stateless RO, the DRM Agent 1 does not manage State Information of the RO.

The DRM Agent 1 notifies a completion for moving RO to the DRM Agent 2 (S240).

The DRM Agent 2 informs the DRM Agent 1 whether the received RO has been successfully installed (S241). The step of S241 can be optionally performed.

The DRM Agent 2 notifies the completion for moving RO to the second user (S242).

When the DRM Agent 2 have successfully installed the RO, the State Information, the DRM content, the DRM Agent 1 deletes the RO managed by itself. When the RO is Stateful RO, the DRM Agent 1 also deletes the State Information of the RO (S243). However, when the Device 1 has moved to the Device 2 the DRM content and a part of the RO in step S243, the DRM Agent 1 of the Device 1 does not delete the RO but updates only the State Information of the RO managed by itself. That is, the State Information of the RO shows a remaining amount of the RO after being moved to the DRM Agent 2. However, when the RO can not be used any longer as a result of the update of the State Information, the DRM Agent 1 can delete the RO.

The DRM Agent 1 notifies moving of the RO to the RI (S244). The notification information includes a Device ID of the transferring Device, a Device ID of the receiving Device, an RO ID of moved RO, and Timestamp denoting moved time of the RO, etc. A Signature can be optionally included in the notification information. The Signature serves to certify the notification information including a Device ID of the transferring Device, a Device ID of the receiving Device, an RO ID of moved RO, and Timestamp indicating moved time of the RO, etc. The step of S244 can be optionally performed.

The DRM Agent 1 notifies a completion for moving the RO to the first user (S245).

The DRM Agent 2 of the Device 2 can notify a reception of the RO to the RI (not shown in FIG. 4).

Accordingly, the Device 2 receives all of RO and specific DRM content from the Device 1 by a request.

The Device of the present invention includes all types of mobile communication terminals (such as a user equipment (UE), a portable phone, a cellular phone, a DMB phone, a DVB-H phone, a PDA phone, a PTT phone, etc.), a digital TV, a GPS navigation, a portable game machine, an MP3, a home appliance, etc. The Device of the present invention includes all Devices that can use DRM content. The term of Group of the present invention can be referred to as a Domain, the Group RO can be referred to as a Domain RO, and the Group Key can be referred to as a Domain Key.

As aforementioned, in the method for moving RO in a DRM according to the present invention, one specific Device directly moves RO to another Device inside Group.

Also, in the method for moving RO in a DRM according to the present invention, a user does not newly receive RO from content issuer or RI but receives the RO from another Device by a request, thereby reducing a cost to obtain the RO and reducing a load required to issue the RO from the RI.

Furthermore, in the present invention, a part or all of RO can be moved between Devices.

Also, since a corresponding permission has to be obtained from the RI when RO is moved between Devices, the RO is prevented from being illegally moved thus to protect DRM content and the RO.

As the present invention may be embodied in several forms, it should also be understood that the above-described embodiments are not limited by any of the details of the foregoing description, unless otherwise specified, but rather should be construed as defined in the appended claims, and therefore all changes and modifications that fall within the metes and bounds of the claims, are therefore intended to be embraced by the appended claims.

## Claims

1. A method of handling digital rights management of digital contents between a first device and a second device, the method performed by the first device and comprising:
obtaining (S101), by the first device from a Rights Issuer "RI", a move permission for moving a rights object "RO" that the first device wishes to move to the second device;
a step of first checking (S102), by the first device, whether the move permission exists for an RO related to a particular digital content that is accessible by the first device, and if the move permission does not exist as a result of the first checking step, the RO is not moved;
a step of second checking (S102), by the first device, whether the move permission has a partial-move attribute indicating that a move of only a subset of the RO or whether the move permission indicates that a move of the RO in its entirety is allowed for the RO that has the move permission as a result of the first checking step,
wherein the RO is either a Stateless RO or a Stateful RO, the Stateless RO is an RO for a device that does not manage state information, and the Stateful RO is an RO for a device that manages state information, and
wherein the Stateful RO includes constraint elements comprising at least one of 'interval', 'count', 'timed-count', 'accumulated', 'datetime', 'individual', and 'system'; and
sending (S103), by the first device to the second device, a move permission message to move only the subset of the RO from the first device to the second device based on the second checking step depending on results from checking whether or not moving of only the subset of the RO is allowed for the RO that has the move permission based on the first checking step,
wherein the RO comprises a Domain RO or a Group RO, and
wherein the Domain RO or Group RO is related to a system constraint and the Stateful RO is related to a count/time constraint.

2. The method of claim 1, wherein the step of moving only the subset of the RO from the first device to the second device comprises:
moving from the first device to the second device, at least one of an identity "ID" of the particular digital content, information of the particular digital content, an ID of the RO, information about the RO, and information related to authentication of the first and second devices,
wherein the subset of the RO denotes a part of a usable RO not having yet been used after being issued from an RI or a part of a usable RO remaining after being used, and
wherein the state information indicates a usable amount of a corresponding RO, and wherein one state information is managed by the Stateful RO.

3. The method of claim 1, wherein the second device, having received the subset of the RO from the first device, can be allowed to move some or all of the subset of the RO to a different device.

4. The method of claim 1, further comprising:
updating the state information to modify the usable amount of the corresponding RO; and
deleting the RO if the RO can no longer be used as a result of the updating of the state information.

5. The method of claim 1, wherein the 'count' is a condition for limiting a number of times of content usage, the 'timed-count' is a condition for limiting a number of times of content usage considering that content is used one time whenever a certain time is lapsed, and the 'system' is a condition for limiting a system in which content is used.

6. The method of claim 1, wherein the step of moving only the subset of the RO from the first device to the second device comprises:
moving only the subset of the RO together with the digital content or moving only the subset of the RO separately from the digital content.

7. A device that supports a method of handling digital rights management of digital contents between said device and a target device, said device comprising:
a memory configured to store digital content and a rights object "RO" related to said digital content; and
a digital rights management "DRM" agent configured to cooperate with said memory and configured to:
obtain (101), from a Rights Issuer "RI", a move permission for moving an RO that the first device wishes to move to the second device;
perform (S102) a first checking step to check whether the move permission exists for the RO, and if the move permission does not exist as a result of the first checking step, the RO is not moved;
perform (S102) a second checking step to check whether the move permission has a partial-move attribute indicating that a move of only a subset of the RO or whether the move permission indicates that a move of the RO in its entirety is allowed for the RO that has the move permission as a result of the first checking step, and
wherein the memory is further configured to store a RO that is either a Stateless RO or a Stateful RO, the Stateless RO being an RO for a device that does not manage state information, and the Stateful RO being an RO for a device that manages state information, and
wherein the Stateful RO includes constraint elements comprising at least one of 'interval', 'count', 'timed-count', 'accumulated', 'datetime', 'individual', and 'system'; and
wherein the DRM agent is further configured to send (S103) a move permission message to move only the subset of the RO from the device to the target device based on the second checking step depending on results from checking whether or not moving of only the subset of the RO is allowed for the RO that has the move permission based on the first checking step, wherein the memory is further configured to store a RO that comprises a Domain RO or a Group RO, and
wherein the Domain RO or Group RO is related to a system constraint and the Stateful RO is related to a count/time constraint.

8. The device of claim 7, wherein said DRM agent is configured to cooperate with said memory in order to:
move from the device to the target device, at least one of an identity "ID" of the particular digital content, information of the particular digital content, an ID of the RO, information about the RO, and information related to authentication of the device and the target device,
wherein the subset of the RO denotes a part of a usable RO not having yet been used after being issued from an RI or a part of a usable RO remaining after being used, and
wherein the state information indicates a usable amount of a corresponding RO, and wherein one state information is managed by the Stateful RO.

9. The device of claim 7, wherein the target device, having received the subset of the RO from the device, can be allowed to move some or all of the subset of the RO to a different device.

10. The device of claim 7, wherein said DRM agent is configured to cooperate with the memory in order to:
update the state information to modify the usable amount of the corresponding RO; and
delete the RO if the RO can no longer be used as a result of the updating of the state information.

11. The device of claim 7, wherein the 'count' is a condition for limiting a number of times of content usage, the 'timed-count' is a condition for limiting a number of times of content usage considering that content is used one time whenever a certain time is lapsed, and the 'system' is a condition for limiting a system in which content is used.

12. The device of claim 7, wherein said DRM agent is configured to cooperate with the memory in order to:
move only the subset of the RO together with the digital content or move only the subset of the RO separately from the digital content.

13. The method of claim 1, further comprising:
upon receiving a response to the move permission message, moving only the subset of the RO from the first device to the second device; and
upon moving only the subset of the RO, making the subset of the RO unusable in the first device when the RO is the Stateful RO.

14. The device of claim 8, said DRM agent being further configured to cooperate with said memory for:
upon receiving a response to the move permission message, moving only the subset of the RO from the device to the target device; and
upon moving only the subset of the RO, making the subset of the RO unusable in the first device when the RO is the Stateful RO.

15. The method of claim 1, wherein the step of checking whether moving of only the subset of the RO is allowed comprises: checking whether a value of the partial-move attribute is true or false.

16. The device of claim 8, wherein the DRM agent is further configured for, when checking whether moving of only the subset of the RO is allowed, checking whether a value of the partial-move attribute is true or false.

## Patentansprüche

1. Verfahren zum Handhaben digitaler Rechteverwaltung von digitalen Inhalten zwischen einem ersten Gerät und einem zweiten Gerät, wobei das Verfahren durch das erste Gerät ausgeführt wird und umfasst:
Erhalten (S101), durch das erste Gerät von einem Rechteausgeber (englisch: Rights Issuer) "RI", einer Bewegungserlaubnis zum Bewegen eines Rechteobjekts (englisch: Rights Object) "RO", das das erste Gerät zu dem zweiten Gerät bewegen möchte;
einen ersten Überprüfungsschritt (S102), durch das erste Gerät, ob die Bewegungserlaubnis für ein RO existiert, das sich auf einen bestimmten digitalen Inhalt bezieht, auf den durch das erste Gerät zugreifbar ist, und, falls die Bewegungserlaubnis als ein Ergebnis des ersten Überprüfungsschritts nicht existiert, das RO nicht bewegt wird;
einen zweiten Überprüfungsschritt (S102), durch das erste Gerät, ob die Bewegungserlaubnis ein Teilbewegungsattribut aufweist, das eine Bewegung nur einer Untermenge des ROs angibt, oder ob die Bewegungserlaubnis angibt, dass eine Bewegung des ROs in seiner Gesamtheit erlaubt ist für das RO, das die Bewegungserlaubnis als ein Ergebnis des ersten Überprüfungsschritts aufweist,
wobei das RO entweder ein zustandsloses RO oder zustandsbehaftetes RO ist, wobei das zustandslose RO ein RO für ein Gerät ist, das Zustandsinformation nicht verwaltet, und das zustandsbehaftete RO ein RO für ein Gerät ist, das Zustandsinformation verwaltet, und
wobei das zustandsbehaftete RO Beschränkungselemente aufweist, die zumindest eines aus 'Intervall' (englisch: interval), 'Zählung' (englisch: count), 'zeitlich festgelegte Zählung' (englisch: timed-count), 'angehäuft' (englisch: accumulated), 'Datumszeit' (englisch: datetime), 'individuell' (englisch: individual) und 'System' (englisch: system) umfasst; und
Senden (S103), durch das erste Gerät an das zweite Gerät, einer Bewegungserlaubnisnachricht, nur die Untermenge des ROs von dem ersten Gerät an das zweite Gerät basierend auf dem zweiten Überprüfungsschritt zu bewegen, abhängig von Ergebnissen des Überprüfens, ob oder nicht nur Bewegung der Untermenge des ROs erlaubt ist für das RO, das die Bewegungserlaubnis basierend auf dem ersten Überprüfungsschritt hat,
wobei das RO ein Domain-RO oder ein Gruppen-RO umfasst, und
wobei das Domain-RO oder das Gruppen-RO in Beziehung steht mit einer Systembeschränkung und das zustandsbehaftete RO in Beziehung steht mit einer Zählungs-/Zeit-Beschränkung.

2. Verfahren nach Anspruch 1, wobei der Schritt des Bewegens nur der Untermenge des ROs von dem ersten Gerät an das zweite Gerät umfasst:
Bewegen von dem ersten Gerät an das zweite Gerät, zumindest eines von einer Identität "ID" des bestimmten digitalen Inhalts, Information des bestimmten digitalen Inhalts, einer ID des ROs, Information über das RO, und Information betreffend eine Authentifizierung des ersten und zweiten Geräts,
wobei die Untermenge des ROs einen Teil eines verwendbaren ROs anzeigt, das noch nicht verwendet worden ist nachdem es von einem RI ausgegeben worden ist oder einen Teil eines verwendbaren ROs, das nach Verwendung verbleibt, und
wobei die Zustandsinformation eine verwendbare Menge eines entsprechenden ROs angibt, und wobei eine Zustandsinformation durch das zustandsbehaftete RO verwaltet wird.

3. Verfahren nach Anspruch 1, wobei dem zweiten Gerät, das die Untermenge des ROs von dem ersten Gerät empfangen hat, erlaubt werden kann, einige oder alle der Untermenge des ROs zu einem anderen Gerät zu bewegen.

4. Verfahren nach Anspruch 1, ferner umfassend:
Aktualisieren der Zustandsinformation, um die verwendbare Menge des entsprechenden ROs zu verändern; und
Löschen des ROs, falls das RO nicht mehr länger verwendet werden kann als ein Ergebnis des Aktualisierens der Zustandsinformation.

5. Verfahren nach Anspruch 1, wobei die 'Zählung' eine Bedingung ist zum Begrenzen einer Anzahl von Zeitpunkten einer Inhaltsverwendung, die 'zeitlich festgelegte Zählung' eine Bedingung ist zum Begrenzen einer Anzahl von Zeitpunkten einer Inhaltsverwendung unter Berücksichtigung, dass Inhalt einmal verwendet wird wann immer eine bestimmte Zeit vergangen ist, und das 'System' eine Bedingung ist zum Begrenzen eines Systems, in welchem Inhalt verwendet wird.

6. Verfahren nach Anspruch 1, wobei der Schritt des Bewegens nur der Untermenge des ROs von dem ersten Gerät an das zweite Gerät umfasst:
Bewegen nur der Untermenge des ROs zusammen mit dem digitalen Inhalt oder Bewegen nur der Untermenge des ROs getrennt von dem digitalen Inhalt.

7. Gerät, das ein Verfahren zum Handhaben digitaler Rechteverwaltung von digitalen Inhalten zwischen dem Gerät und einem Zielgerät unterstützt, wobei das Gerät umfasst:
einen Speicher, der dazu ausgebildet ist, digitalen Inhalt und ein Rechteobjekt (englisch: Rights Object) "RO", das sich auf den digitalen Inhalt bezieht, zu speichern; und
einen digitalen Rechteverwaltungs (englisch: Digital Rights Management) "DRM" -Agenten, der dazu ausgebildet ist, mit dem Speicher zusammenzuarbeiten und dazu ausgebildet ist:
von einem Rechteausgeber (englisch: Rights Issuer) "RI" eine Bewegungserlaubnis zum Bewegen eines Rechteobjekts (englisch: Rights Object) "RO" zu erhalten (101), das das erste Gerät zu dem zweiten Gerät bewegen möchte;
einen ersten Überprüfungsschritt auszuführen (S102), um zu überprüfen, ob die Bewegungserlaubnis für ein RO existiert, und, falls die Bewegungserlaubnis als ein Ergebnis des ersten Überprüfungsschritts nicht existiert, das RO nicht bewegt wird;
einen zweiten Überprüfungsschritt auszuführen (S102), um zu überprüfen, ob die Bewegungserlaubnis ein Teilbewegungsattribut aufweist, das eine Bewegung nur einer Untermenge des ROs angibt, oder ob die Bewegungserlaubnis angibt, dass eine Bewegung des ROs in seiner Gesamtheit erlaubt ist für das RO, das die Bewegungserlaubnis als ein Ergebnis des ersten Überprüfungsschritts aufweist,
wobei der Speicher ferner ausgebildet ist, ein RO, das entweder ein zustandsloses RO oder zustandsbehaftetes RO ist, zu speichern, wobei das zustandslose RO ein RO für ein Gerät ist, das Zustandsinformation nicht verwaltet, und das zustandsbehaftete RO ein RO für ein Gerät ist, das Zustandsinformation verwaltet, und
wobei das zustandsbehaftete RO Beschränkungselemente aufweist, die zumindest eines aus 'Intervall' (englisch: interval), 'Zählung' (englisch: count), 'zeitlich festgelegte Zählung' (englisch: timed-count), 'angehäuft' (englisch: accumulated), 'Datumszeit' (englisch: datetime), 'individuell' (englisch: individual) und 'System' (englisch: system) umfasst; und
eine Bewegungserlaubnisnachricht zu senden, nur die Untermenge des ROs von dem ersten Gerät an das zweite Gerät basierend auf dem zweiten Überprüfungsschritt zu bewegen, abhängig von Ergebnissen des Überprüfens, ob oder nicht nur Bewegung der Untermenge des ROs erlaubt ist für das RO, das die Bewegungserlaubnis basierend auf dem ersten Überprüfungsschritt hat,
wobei der Speicher ferner ausgebildet ist, das RO, das ein Domain-RO oder ein Gruppen-RO umfasst, zu speichern und
wobei das Domain-RO oder das Gruppen-RO in Beziehung steht mit einer Systembeschränkung und das zustandsbehaftete RO in Beziehung steht mit einer Zählungs-/Zeit-Beschränkung.

8. Gerät nach Anspruch 7, wobei der DRM-Agent ausgebildet ist, mit dem Speicher zusammenzuarbeiten, um:
zumindest eines aus einer Identität "ID" des bestimmten digitalen Inhalts, Information des bestimmten digitalen Inhalts, einer ID des ROs, Information über das RO, und Information betreffend eine Authentifizierung des Geräts und Zielgerät von dem Gerät an das Zielgerät zu bewegen,
wobei die Untermenge des ROs einen Teil eines verwendbaren ROs anzeigt, das noch nicht verwendet worden ist nachdem es von einem RI ausgegeben worden ist, oder einen Teil eines verwendbaren ROs, das nach Verwendung verbleibt, und
wobei die Zustandsinformation eine verwendbare Menge eines entsprechenden ROs angibt, und wobei eine Zustandsinformation durch das zustandsbehaftete RO verwaltet wird.

9. Gerät nach Anspruch 7, wobei dem Zielgerät, das die Untermenge des ROs von dem Gerät empfängt, erlaubt werden kann, einige oder alle der Untermenge des ROs zu einem anderen Gerät zu bewegen.

10. Gerät nach Anspruch 7, wobei der DRM-Agent ausgebildet ist, mit dem Speicher zusammenzuarbeiten, um:
die Zustandsinformation zu aktualisieren, um die verwendbare Menge des entsprechenden ROs zu verändern; und
das RO zu löschen, falls das RO nicht mehr länger verwendet werden kann als ein Ergebnis des Aktualisierens der Zustandsinformation.

11. Gerät nach Anspruch 7, wobei die 'Zählung' eine Bedingung ist zum Begrenzen einer Anzahl von Zeitpunkten einer Inhaltsverwendung, die 'zeitlich festgelegte Zählung' eine Bedingung ist zum Begrenzen einer Anzahl von Zeitpunkten einer Inhaltsverwendung unter Berücksichtigung, dass Inhalt einmal verwendet wird wann immer eine bestimmte Zeit vergangen ist, und das 'System' eine Bedingung ist zum Begrenzen eines Systems, in welchem Inhalt verwendet wird.

12. Gerät nach Anspruch 7, wobei DRM-Agent ausgebildet ist, mit dem Speicher zusammenzuarbeiten, um:
nur die Untermenge des ROs zusammen mit dem digitalen Inhalt oder nur die Untermenge des ROs getrennt von dem digitalen Inhalt zu bewegen.

13. Verfahren nach Anspruch 1, ferner umfassend:
bei Empfang einer Antwort der Bewegungserlaubnisnachricht, nur Bewegen der Untermenge des ROs von dem ersten Gerät zu dem zweiten Gerät; und
bei Empfang nur der Untermenge des ROs, die Untermenge des ROs als unverwendbar in dem ersten Gerät setzen, wenn das RO das zustandsbehaftete RO ist.

14. Gerät nach Anspruch 8, wobei der DRM-Agent ferner ausgebildet ist, zum:
bei Empfang einer Antwort der Bewegungserlaubnisnachricht, nur Bewegen der Untermenge des ROs von dem Gerät zu dem Zielgerät; und
bei Empfang nur der Untermenge des ROs, die Untermenge des ROs als unverwendbar in dem Gerät setzen, wenn das RO das zustandsbehaftete RO ist.

15. Verfahren nach Anspruch 1, wobei der Schritt des Überprüfens, ob nur die Untermenge des RO bewegt werden darf, umfasst: Überprüfen, ob ein Wert des Teilbewegungsattributs wahr oder falsch ist.

16. Gerät nach Anspruch 8, wobei der DRM-Agent ferner ausgebildet ist zum, wenn überprüft wird, ob nur die Untermenge des RO bewegt werden darf, Überprüfen, ob ein Wert des Teilbewegungsattributs wahr oder falsch ist.

## Revendications

1. Procédé d'acheminement de gestion de droits numériques de contenus numériques entre un premier dispositif et un deuxième dispositif, le procédé mis en oeuvre par le premier dispositif et comprenant :
l'obtention (S101), par le premier dispositif, d'un émetteur de droits « RI », d'une permission de déplacement pour déplacer un objet de droits « RO » que le premier dispositif désire déplacer jusqu'au deuxième dispositif ;
une étape de premier contrôle (S102), par le premier dispositif, que la permission de déplacement existe pour un RO se rapportant à un contenu numérique particulier qui est accessible par le premier dispositif, et si la permission de déplacement n'existe pas comme un résultat de la première étape de contrôle, le RO n'est pas déplacé ;
une étape de deuxième contrôle (S102), par le premier dispositif, que la permission de déplacement a un attribut de déplacement partiel indiquant qu'un déplacement de seulement un sous-ensemble du RO ou que la permission de déplacement indique qu'un déplacement du RO dans son intégralité est autorisé pour le RO qui a la permission de déplacement comme un résultat de la première étape de contrôle,
dans lequel le RO est soit un RO statique, soit un RO dynamique, le RO statique est un RO pour un dispositif qui ne gère pas une information d'état, et le RO dynamique est un RO pour un dispositif qui gère une information d'état, et
dans lequel le RO dynamique inclut des éléments de contrainte comprenant au moins un parmi « intervalle », « compte », « compte temporisé », « accumulé », « date et heure », « individuel », et « système » ; et
l'envoi (S103), par le premier dispositif au deuxième dispositif, d'un message de permission de déplacement pour déplacer seulement le sous-ensemble du RO du premier dispositif au deuxième dispositif sur la base de la deuxième étape de contrôle en fonction de résultats d'un contrôle que le déplacement de seulement le sous-ensemble du RO est ou non autorisé pour le RO qui a la permission de déplacement sur la base de la première étape de contrôle,
dans lequel le RO comprend un RO de domaine ou un RO de groupe, et
dans lequel le RO de domaine ou le RO de groupe se rapporte à une contrainte système et le RO dynamique se rapporte à une contrainte de compte/temps.

2. Procédé selon la revendication 1, dans lequel l'étape de déplacement de seulement le sous-ensemble du RO du premier dispositif au deuxième dispositif comprend :
le déplacement du premier dispositif au deuxième dispositif d'au moins un parmi un « ID » d'identité du contenu numérique particulier, une information du contenu numérique particulier, un ID du RO, une information à propos du RO, et une information se rapportant à une authentification des premier et deuxième dispositifs,
dans lequel le sous-ensemble du RO dénote une partie d'un RO utilisable n'ayant pas encore été utilisée après qu'il a été émis par un RI ou une partie d'un RO utilisable restant après qu'il a été utilisé, et
dans lequel l'information d'état indique une quantité utilisable d'un RO correspondant, et dans lequel une information d'état est gérée par le RO dynamique.

3. Procédé selon la revendication 1, dans lequel le deuxième dispositif, ayant reçu le sous-ensemble du RO du premier dispositif, peut être autorisé à déplacer une partie ou la totalité du sous-ensemble du RO jusqu'à un dispositif différent.

4. Procédé selon la revendication 1, comprenant en outre :
la mise à jour de l'information d'état pour modifier la quantité utilisable du RO correspondant ; et
la suppression du RO si le RO ne peut plus être utilisé comme un résultat de la mise à jour de l'information d'état.

5. Procédé selon la revendication 1, dans lequel le « compte » est une condition pour limiter un nombre de fois d'utilisation de contenu, le « compte temporisé » est une condition pour limiter un nombre de fois d'utilisation de contenu en considérant que le contenu est utilisé une fois à chaque fois qu'un certain temps s'est écoulé, et le « système » est une condition pour limiter un système dans lequel le contenu est utilisé.

6. Procédé selon la revendication 1, dans lequel l'étape de déplacement de seulement le sous-ensemble du RO du premier dispositif au deuxième dispositif comprend :
le déplacement de seulement le sous-ensemble du RO en même temps que le contenu numérique ou le déplacement de seulement le sous-ensemble du RO séparément du contenu numérique.

7. Dispositif qui supporte un procédé d'acheminement de gestion de droits numériques de contenus numériques entre ledit dispositif et un dispositif cible, ledit dispositif comprenant :
une mémoire configurée pour stocker un contenu numérique et un objet de droits « RO » se rapportant audit contenu numérique ; et
un agent de gestion de droits numériques « DRM » configuré pour coopérer avec ladite mémoire et configuré pour :
obtenir (101), d'un émetteur de droits « RI », une permission de déplacement pour déplacer un RO que le premier dispositif désire déplacer jusqu'au deuxième dispositif ;
exécuter (S102) une première étape de contrôle pour contrôler que la permission de déplacement existe pour le RO, et si la permission de déplacement n'existe pas comme un résultat de la première étape de contrôle, le RO n'est pas déplacé ;
exécuter (S102) une deuxième étape de contrôle pour contrôler que la permission de déplacement a un attribut de déplacement partiel indiquant qu'un déplacement de seulement un sous-ensemble du RO ou que la permission de déplacement indique qu'un déplacement du RO dans son intégralité est autorisé pour le RO qui a la permission de déplacement comme un résultat de la première étape de contrôle, et
dans lequel la mémoire est en outre configurée pour stocker un RO qui est soit un RO statique, soit un RO dynamique, le RO statique étant un RO pour un dispositif qui ne gère pas une information d'état, et le RO dynamique étant un RO pour un dispositif qui gère une information d'état, et
dans lequel le RO dynamique inclut des éléments de contrainte comprenant au moins un parmi « intervalle », « compte », « compte temporisé », « accumulé », « date et heure », « individuel », et « système » ; et dans lequel l'agent DRM est en outre configuré pour
envoyer (S103) un message de permission de déplacement pour ne déplacer que le sous-ensemble du RO du dispositif au dispositif cible sur la base de la deuxième étape de contrôle en fonction de résultats d'un contrôle que le déplacement de seulement le sous-ensemble du RO est ou non autorisé pour le RO qui a la permission de déplacement sur la base de la première étape de contrôle,
dans lequel la mémoire est en outre configurée pour stocker un RO qui comprend un RO de domaine ou un RO de groupe, et
dans lequel le RO de domaine ou le RO de groupe se rapporte à une contrainte système et le RO dynamique se rapporte à une contrainte de compte/temps.

8. Dispositif selon la revendication 7, dans lequel ledit agent DRM est configuré pour coopérer avec ladite mémoire afin de :
déplacer du dispositif au dispositif cible au moins un parmi un « ID » d'identité du contenu numérique particulier, une information du contenu numérique particulier, un ID du RO, une information à propos du RO, et une information se rapportant à une authentification du dispositif et du dispositif cible,
dans lequel le sous-ensemble du RO dénote une partie d'un RO utilisable n'ayant pas encore été utilisée après qu'il a été émis par un RI ou une partie d'un RO utilisable restant après qu'il a été utilisé, et
dans lequel l'information d'état indique une quantité utilisable d'un RO correspondant, et dans lequel une information d'état est gérée par le RO dynamique.

9. Dispositif selon la revendication 7, dans lequel le dispositif cible, ayant reçu le sous-ensemble du RO du dispositif, peut être autorisé à déplacer une partie ou la totalité du sous-ensemble du RO jusqu'à un dispositif différent.

10. Dispositif selon la revendication 7, dans lequel ledit agent DRM est configuré pour coopérer avec la mémoire afin de :
mettre à jour l'information d'état pour modifier la quantité utilisable du RO correspondant ; et
supprimer le RO si le RO ne peut plus être utilisé comme un résultat de la mise à jour de l'information d'état.

11. Dispositif selon la revendication 7, dans lequel le « compte » est une condition pour limiter un nombre de fois d'utilisation de contenu, le « compte temporisé » est une condition pour limiter un nombre de fois d'utilisation de contenu en considérant que le contenu est utilisé une fois à chaque fois qu'un certain temps s'est écoulé, et le « système » est une condition pour limiter un système dans lequel le contenu est utilisé.

12. Dispositif selon la revendication 7, dans lequel ledit agent DRM est configuré pour coopérer avec la mémoire afin de :
déplacer seulement le sous-ensemble du RO en même temps que le contenu numérique ou déplacer seulement le sous-ensemble du RO séparément du contenu numérique.

13. Procédé selon la revendication 1, comprenant en outre :
à la réception d'une réponse au message de permission de déplacement, le déplacement seulement du sous-ensemble du RO du premier dispositif au deuxième dispositif ; et
au déplacement seulement du sous-ensemble du RO, le rendu du sous-ensemble du RO inutilisable dans le premier dispositif lorsque le RO est le RO dynamique.

14. Dispositif selon la revendication 8, ledit agent DRM étant en outre configuré pour coopérer avec ladite mémoire afin de :
à la réception d'une réponse au message de permission de déplacement, déplacer seulement le sous-ensemble du RO du dispositif au dispositif cible; et
au déplacement seulement du sous-ensemble du RO, rendre le sous-ensemble du RO inutilisable dans le premier dispositif lorsque le RO est le RO dynamique.

15. Procédé selon la revendication 1, dans lequel l'étape de contrôle que le déplacement de seulement le sous-ensemble du RO est autorisé comprend : le contrôle si une valeur de l'attribut de déplacement partiel est vraie ou fausse.

16. Dispositif selon la revendication 8, dans lequel l'agent DRM est en outre configuré pour, lors du contrôle que le déplacement de seulement le sous-ensemble du RO est autorisé, contrôler si une valeur de l'attribut de déplacement partiel est vraie ou fausse.
